# EUROPÄISCHE PATENTANMELDUNG

(11) **EP 1 650 068 A2**
(43) Veröffentlichungstag der Anmeldung: **26.04.2006**
(21) Anmeldenummer: 05013811.4
(22) Anmeldetag: 27.06.2005
(51) Int. Cl.: B60J 7/02

(54) **Deckel für ein Schiebedachsystem**

(30) Priorität: 19.10.2004 DE 102004050811
(71) Anmelder: ArvinMeritor GmbH, 63128 Dietzenbach (DE)
(72) Erfinder: Becher, Thomas, 63110 Rodgau (DE); Böhm, Horst, 60599 Frankfurt/Main (DE); Grimm, Rainer, 60588 Frankfurt (DE)
(74) Vertreter: Sties, Jochen

(57) **Zusammenfassung**

Deckel für ein Schiebedachsystem, mit einem ersten und einem zweiten Führungselement (20, 22), die an voneinander abgewandten Seiten des Deckels (16) so angebracht sind, daß ihr Abstand voneinander variabel ist, einer ersten und einer zweiten Drehachse (32, 44), die am Deckel (16) in einem festen Abstand voneinander gebildet sind, einem ersten und einem zweiten Verstellelement (30, 42), wobei das erste Verstellelement (30) mit dem ersten Führungselement (20) gekoppelt und drehbar um die erste Drehachse (32) am Deckel (16) angebracht ist und das zweite Verstellelement (42) mit dem zweiten Führungselement (22) gekoppelt und drehbar um die zweite Drehachse (44) am Deckel (16) angebracht ist, einem ersten Zugglied (34), das mit den beiden Verstellelementen (30, 42) jeweils auf einer Seite der entsprechenden Drehachse (32, 44) gekoppelt ist, und einem zweiten Zugglied (36), das mit den beiden Verstellelementen (30, 42) jeweils auf der entgegengesetzten Seite der entsprechenden Drehachse (32, 44) gekoppelt ist, wobei die beiden Zugglieder (34, 36) permanent einer Zugspannung ausgesetzt sind.

## Beschreibung

Die Erfindung betrifft einen Deckel für ein Schiebedachsystem.

Bei bekannten Schiebedachsystemen kann ein Deckel eine Dachöffnung vollständig oder teilweise freigeben, da er verfahrbar an meist zwei Führungsschienen gekoppelt ist. Dabei sind Schiebehebedächer bekannt, bei denen der Deckel unter die feste Dachhaut verschoben wird, und Spoilerdächer, bei denen der Deckel über die Dachhaut verschoben wird. Die Führungsschienen, in denen der Deckel verfahren wird, verlaufen gewöhnlich parallel zu den Kanten des festen Dachteils. Da Dächer bei modernen Fahrzeugen üblicherweise gekrümmt ausgebildet sind und eine sich von vorne nach hinten ändernde Breite haben, sind die Führungsschienen nicht parallel zueinander angeordnet. Solche nicht parallelen Führungsschienen sind beispielsweise aus der DE 100 02 457 A1 bekannt.

Bei einem nicht parallelen Verlauf der Führungsschienen besteht das Problem, einen Deckel zentriert zu verschieben, da sich der Abstand zwischen den Führungsschienen ändert.

Angesichts dieses Problems wurde daher in der DE 100 02 457 A1 vorgeschlagen, Parallelogrammführungen mit zueinander parallel angeordneten Schwenkarmen anzuordnen. Diese Lösung ist insofern nachteilig, da diese Gelenkparallelogramme aufwendig und komplex sind. Zudem erfordern sie einen beträchtlichen Bauraum.

Auch sind Deckelzentrierungen bekannt, die drucksteife, miteinander gekoppelte Antriebselemente aufweisen. Diese Antriebselemente benötigen einen beträchtlichen Bauraum. Sie können deswegen, z.B. bei Glasdeckeln, Teile der Glasfläche bedecken und dadurch die Durchsichtfläche einschränken.

Der Erfindung liegt das Problem zu Grunde, einen Deckel für ein Schiebedachsystem zu schaffen, der mit geringem Aufwand und Bauraum zwischen zwei nicht parallelen Führungsschienen beim Verschieben zentriert ist.

Dieses Problem wird gelöst durch einen Deckel, mit einem ersten und einem zweiten Führungselement, die an voneinander abgewandten Seiten des Deckels so angebracht sind, daß ihr Abstand voneinander variabel ist, einer ersten und einer zweiten Drehachse, die am Deckel in einem festen Abstand voneinander gebildet sind, einem ersten und einem zweiten Verstellelement, wobei das erste Verstellelement mit dem ersten Führungselement gekoppelt und drehbar um die erste Drehachse am Deckel angebracht ist und das zweite Verstellelement mit dem zweiten Führungselement gekoppelt und drehbar um die zweite Drehachse am Deckel angebracht ist, einem ersten Zugglied, das mit den beiden Verstellelementen jeweils auf einer Seite der entsprechenden Drehachse gekoppelt ist, und einem zweiten Zugglied, das mit den beiden Verstellelementen jeweils auf der entgegengesetzten Seite der entsprechenden Drehachse gekoppelt ist, wobei die beiden Zugglieder permanent einer Zugspannung ausgesetzt sind. Die mit der Erfindung erzielten Vorteile bestehen insbesondere darin, eine platzsparende Deckelzentrierung auf Grund der Verwendung von Zugglieder zu ermöglichen. Darüber hinaus gewährleisten die Zugglieder, die stets unter Zugspannung stehen, ein Verschieben und Halten des Deckels ohne Spiel.

Vorzugsweise ist das Verstellelement ein zweiarmiger Hebel, der sowohl effektiv in seiner Wirkungsweise als auch leicht in seiner Montage ist.

Das Verstellelement ist bevorzugt durch ein Zahnrad in Kombination mit einer Seilrolle gebildet. Die Verwendung eines Zahnrades verhindert ruckartige Bewegungen beim Verschieben des Deckels aufgrund der Trägheit des Zahnrades.

Vorzugsweise ist eine Feder vorgesehen, die das Zugglied gespannt hält. Die Feder ermöglicht eine Vorspannung des Zugglieds und so eine schnelle Montage der Zugglieder.

Weitere Merkmale und Vorteile der Erfindung ergeben sich aus den Unteransprüchen. Die Erfindung wird nachfolgend anhand der bevorzugten Ausführungsform beschrieben, die in den Zeichnungen dargestellt ist. In den Zeichnungen zeigen:
Fig. 1 eine schematische Ansicht eines Fahrzeugdaches mit einen erfindungsgemäßen Deckel für ein Schiebedachsystem;
Fig. 2 eine Ansicht des Deckels für ein Schiebedachsystem in einer ersten Ausführungsform;
Fig. 3 eine Ansicht des Deckels für ein Schiebedachsystems in einer zweiten Ausführungsform;
Fig. 4 einen vergrößerten Ausschnitt des mit X bezeichneten Bereichs in Figur 3 des Deckels; und
Fig. 5 eine Schnittansicht durch den Deckel für ein Schiebedachsystem nach Fig. 3 entlang der Linie V-V.

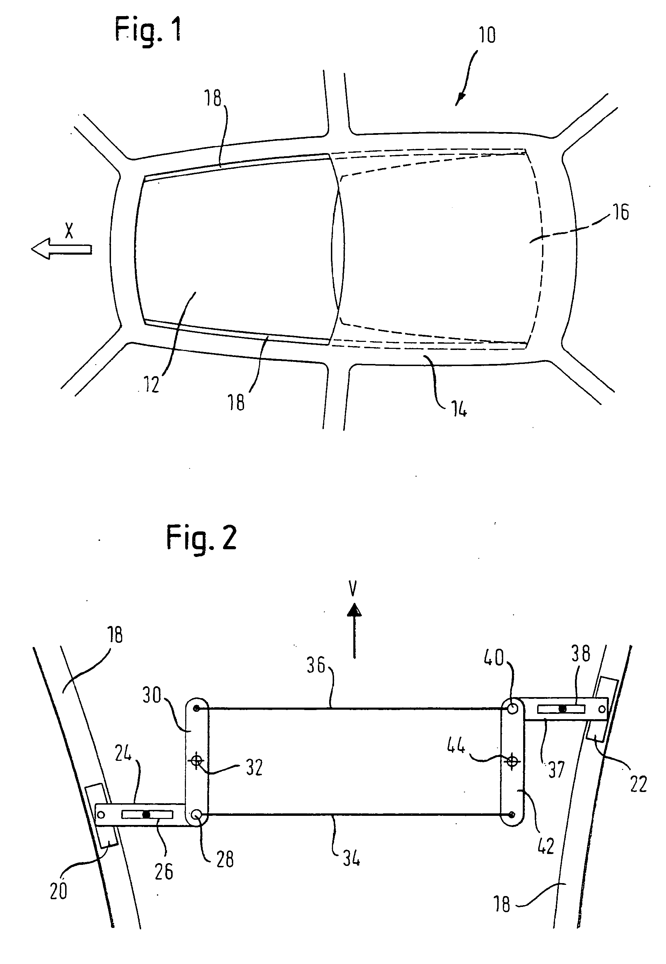

Fig. 1 zeigt ein Fahrzeugdach 10 mit einem Schiebedachsystem. Das Schiebedachsystem weist eine Dachöffnung 12 in einem festen Dachteil 14 auf. Die Dachöffnung 12 kann durch einen entgegen der Fahrtrichtung X des Fahrzeugs verschiebbaren Deckel 16 freigelegt werden.

Der Deckel 16 ist in zwei Führungsschienen 18 geführt, die parallel zu den Kanten des festen Dachteils 14 angeordnet. Da Dächer bei modernen Fahrzeugen üblicherweise gekrümmt ausgebildet sind und eine sich von vorne nach hinten ändernde Breite haben, sind die Führungsschienen 18, die dem Verlauf der Kanten des Daches folgen, nicht parallel zueinander angeordnet. Der Abstand der Führungsschienen 18 ändert sich dementsprechend in Abhängigkeit von der Position entlang der betrachteten Längsachse.

Der Deckel 16 ist in grundsätzlich bekannter Weise in den Führungsschienen 18 verschiebbar und kann von einem (nicht dargestellten) Antriebsmechanismus aus einer geschlossenen Stellung in eine geöffnete Stellung und zurück überführt werden. Die Erfindung bezieht sich sowohl auf Spoilerdächer, bei denen der Deckel über die Außenhaut verfahren wird, als auch auf Schiebe-Hebedächer, bei denen der Deckel unter die Außenhaut verfahren wird, sowie auf Deckel aus Metall, Kunststoff, transparentem Material, Glas, etc.

Fig. 2 zeigt eine erste Ausführungsform des Deckels 16 für ein Schiebedachsystem. Ein erstes Führungselement 20 und ein zweites Führungselement 22 sind an voneinander abgewandten Seiten des Deckels 16 angebracht. Das erste und zweite Führungselement 20, 22 verlaufen in den Führungsschienen 18 und sind hier als Schlitten ausgeführt. An den Führungselementen 20, 22 greift der (nicht dargestellte) Antriebsmechanismus für den Deckel 16 an.

Ein Stellhebel 24 ist an das erste Führungselement 20 gelenkig gekoppelt. Der Stellhebel 24 ist in einer Kulissenführung 26 aufgenommen, die fest am Deckel 16 angebracht ist und aus einer Kulisse und einem Bolzen besteht, der sich in der Kulisse bewegen kann. Als Aufnahme für den Stellhebel 24 sind auch andere Führungen möglich.

Mit dem vom Führungselement 20 abgewandten Ende des Stellhebels 24 ist über ein Gelenk 28 ein erstes Verstellelement 30 verbunden. Das Verstellelement 30 ist als zweiarmiger Hebel ausgeführt, wobei der zweiarmige Hebel mittig durch eine Drehachse 32 drehbar am Deckel 16 gelagert ist.

An dem Ende des zweiarmigen Hebels, das über das Gelenk 28 an den Stellhebel 24 gekoppelt ist, ist ein erstes Zugglied 34 befestigt. An dem entgegensetzten Ende des zweiarmigen Hebels ist ein zweites Zugglied 36 befestigt. Die Zugglieder 34, 36 sind als Metallseile oder Ketten ausgeführt und gestrafft. Die erforderliche Vorspannung der Zugglieder 34, 36 kann mittels einer Feder (nicht gezeigt) erfolgen.

Eine punksymmetrische Anordnung dieser beschriebenen Ausführung ist auf der gegenüberliegenden Seite gezeigt. Das zweite Führungselement 22 weist einen Stellhebel 37 auf, der gelenkig an dem zweiten Führungselement 22 gekoppelt ist und in einer Kulissenführung 38 geführt ist. Der Stellhebel 37 ist wiederum über ein Gelenk 40 mit einem zweiten Verstellelement 42 gekoppelt. Dabei ist das zweite Verstellelement 42 ebenfalls ein zweiarmiger Hebel. Der zweiarmige Hebel ist mittig über eine zweite Drehachse 44 am Deckel 16 gelagert.

An dem Ende des als Hebel ausgebildeten Verstellelements 42, an dem der Stellhebel 37 gekoppelt ist, greift das zweite Zugglied 36 an. An dem entgegengesetzten Ende des zweiarmigen Hebels greift das erste Zugglied 34 an.

Die Zugglieder 34, 36 sind jeweils auf einer Seite der entsprechenden Drehachsen 32, 44 mit den Verstellelementen 30, 42 gekoppelt, d.h. sie überkreuzen sich nicht, sondern verlaufen in etwa parallel zueinander.

Beim Verschieben des Deckels 16 in Richtung V erhöht sich der Abstand der Führungsschienen 18 zueinander. Dadurch verdrehen sich die zweiarmigen Hebel 30, 42 um die Drehachsen 32, 44 im Uhrzeigersinn und parallel zueinander. Die Zugglieder 34, 36 halten dabei den Abstand der Verstellelemente 30, 42 zueinander konstant und sind dabei permanent einer Zugspannung ausgesetzt.

Beim Verschieben des Deckels 16 entgegen der Richtung V verringert sich der Abstand der Führungsschienen 18 zueinander, und die zweiarmigen Hebel 30, 42 verdrehen sich entgegen dem Uhrzeigersinn parallel zueinander. Die Zugglieder 34, 36 halten dabei wiederum den Abstand konstant und sind einer Zugspannung ausgesetzt.

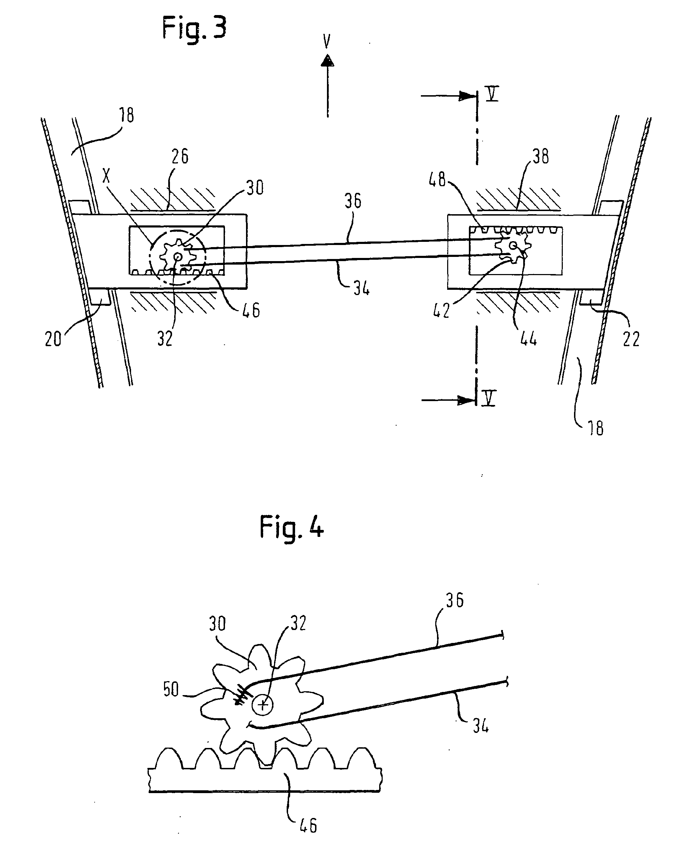

Fig. 3 zeigt eine zweite Ausführungsform des Deckels 16 für das Schiebedachsystem von Fig. 1. Für die von der ersten Ausführungsform bekannten Bauteile werden dieselben Bezugszeichen verwendet, und es wird insoweit obigen Erläuterungen verwiesen.

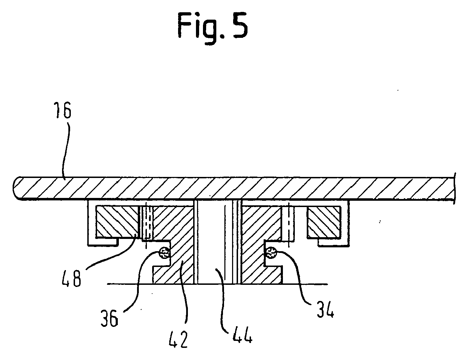

Die Zugglieder 34, 36 sind wie in der ersten Ausführungsform jeweils auf einer Seite der jeweiligen Drehachsen 32, 44 an Verstellelementen 30, 42 gekoppelt. Die Verstellelemente 30, 42 sind als Zahnräder ausgeführt und weisen Seilrollen auf (siehe Fig. 5), an denen die Zugglieder 34, 36 angebracht sind. Die als Zahnräder ausgebildeten Verstellelemente 30, 42 sind drehbar um die Drehachsen 32, 44 am Deckel 16 gelagert.

Die als Zahnräder ausgeführte Verstellelemente 30, 42 greifen an Zahnstangen 46, 48 an, die an gegenüberliegenden Enden von rechteckförmigen Aussparungen in den Führungselementen 20, 22 angeordnet sind

Fig. 4 zeigt die Anordnung der Zugglieder 34, 36 am Beispiel des ersten Verstellelements 30, wobei das zweite Verstellelement 42 in derselben Art und Weise ausgeführt ist. Das zweite Zugglied 36 ist über eine Feder 50 an das erste Verstellelement 30 gekoppelt, während das erste Zugglied 34 fest am ersten Verstellelement 30 befestigt ist. Es könnten auch beide Zugglieder 34, 36 mittels Federn 50 oder ohne Federn 50 befestigt werden. Die Federn 50 ermöglichen jedoch eine leichtere Montage. Des weiteren ist eine Vorspannung der Zugglieder 34, 36 gewährleistet.

Fig. 5 zeigt einen Schnitt durch das zweite Verstellelement 42. Es ist selbstverständlich, daß das erste Verstellelement 30 auf dieselbe Art und Weise ausgebildet ist. Eine Seilrolle, die Teil des als Zahnrad ausgebildeten Verstellelements 42 ist, nimmt die Zugglieder 34, 36 auf und führt sie. Das Verstellelement 42 greift einseitig in die Zahnstange 48 ein und ist über die Drehachse 44 am Deckel 16 gelagert.

Die Funktionsweise der zweiten Ausführungsform entspricht der ersten Ausführungsform. Auch hier sind die Zugglieder 34, 36 einer dauerhaften Zugspannung ausgesetzt und ermöglichen einen konstanten Abstand der Drehachsen 32, 44 und somit der Führungselemente 20, 22. Bei einem Verschieben des Deckels 16 können sich die Zahnräder drehen und die Zahnstangen 46, 48 wandern nach außen (Verschieben des Deckels 16 in Richtung V) oder innen (Verschieben des Deckels entgegen der Richtung V). Die als Zahnräder ausgebildeten Verstellelement 30, 42 gewährleisten dabei eine gleichmäßige Bewegung auf Grund der Trägheit der Zahnräder.

### Bezugszeichenliste

- 10: Fahrzeugdach
- 12: Dachöffnung
- 14: festes Dachteil
- 16: Deckel
- 18: Führungsschienen
- 20: Führungselement
- 22: Führungselement
- 24: Stellhebel
- 26: Schiebeführung
- 28: Gelenk
- 30: Verstellelement
- 32: Drehachse
- 34: Zugglied
- 36: Zugglied
- 37: Stellhebel
- 38: Schiebeführung
- 40: Gelenk
- 42: Verstellelement
- 44: Drehachse
- 46: Zahnstange
- 48: Zahnstange
- 50: Feder

## Patentansprüche

1. Deckel für ein Schiebedachsystem, mit einem ersten und einem zweiten Führungselement (20, 22), die an voneinander abgewandten Seiten des Deckels (16) so angebracht sind, daß ihr Abstand voneinander variabel ist, einer ersten und einer zweiten Drehachse (32, 44), die am Deckel (16) in einem festen Abstand voneinander gebildet sind, einem ersten und einem zweiten Verstellelement (30, 42), wobei das erste Verstellelement (30) mit dem ersten Führungselement (20) gekoppelt und drehbar um die erste Drehachse (32) am Deckel (16) angebracht ist und das zweite Verstellelement (42) mit dem zweiten Führungselement (22) gekoppelt und drehbar um die zweite Drehachse (44) am Deckel (16) angebracht ist, einem ersten Zugglied (34), das mit den beiden Verstellelementen (30, 42) jeweils auf einer Seite der entsprechenden Drehachse (32, 44) gekoppelt ist, und einem zweiten Zugglied (36), das mit den beiden Verstellelementen (30, 42) jeweils auf der entgegengesetzten Seite der entsprechenden Drehachse (32, 44) gekoppelt ist, wobei die beiden Zugglieder (34, 36) permanent einer Zugspannung ausgesetzt sind.

2. Deckel nach Anspruch 1, **dadurch gekennzeichnet, daß** das Verstellelement (30, 42) ein zweiarmiger Hebel ist.

3. Deckel nach Anspruch 2, **dadurch gekennzeichnet, daß** das Führungselement (20, 22) mittels eines Stellhebels (24, 37) gelenkig mit dem zweiarmigen Hebel gekoppelt ist.

4. Deckel nach Anspruch 1, **dadurch gekennzeichnet, daß** das Verstellelement (30, 42) durch ein Zahnrad in Kombination mit einer Seilrolle gebildet ist.

5. Deckel nach Anspruch 4, **dadurch gekennzeichnet, daß** das Führungselement (20, 22) eine Zahnstange (46, 48) aufweist, die mit dem Zahnrad gekoppelt ist.

6. Deckel nach einem der vorhergehenden Ansprüche, **dadurch gekennzeichnet, daß** das erste und das zweite Zugglied (34, 36) als zwei getrennte Bauteile ausgeführt ist.

7. Deckel nach einem der Ansprüche 1 bis 5, **dadurch gekennzeichnet, daß** das erste und das zweite Zugglied (34, 36) einstückig ausgeführt sind.

8. Deckel nach Anspruch 7, **dadurch gekennzeichnet, daß** eine Feder (50) vorgesehen ist, die das Zugglied (34, 36) gespannt hält.

9. Deckel nach einem der vorhergehenden Ansprüche, **dadurch gekennzeichnet, daß** das Zugglied (34, 36) ein Metallseil ist.

10. Deckel nach einem der Ansprüche 1 bis 8, **dadurch gekennzeichnet, daß** das Zugglied (34, 36) eine Kette ist.
